# EUROPÄISCHE PATENTSCHRIFT

(11) **EP 2 463 077 B1**
(45) Veröffentlichungstag und Bekanntmachung des Hinweises auf die Patenterteilung: **29.01.2014**
(21) Anmeldenummer: 10194589.7
(22) Anmeldetag: 10.12.2010
(51) Int. Cl.: B29C 47/88

(54) **Aufsatzkühlring für einen Folienblaskopf einer Blasfolienanlage und Verfahren zum Herstellen eines Blasfolienschlauches**
Attachment cooling ring for a film blowing head of a blown film system and method for producing a blown film
Anneau de refroidissement pour une tête de soufflage d'une installation de soufflage de films et procédé de fabrication d'un film tubulaire soufflé

(43) Veröffentlichungstag der Anmeldung: 13.06.2012
(73) Patentinhaber: Mondi Gronau GmbH, 48599 Gronau (DE)
(72) Erfinder: Rudolph, Sven, 06258 Schkopau (DE); Hagemann, Andreas, 48599 Gronau (DE); Wientjes, Christian, 48455 Bad Bentheim (DE)
(74) Vertreter: Albrecht, Rainer Harald

(56) Entgegenhaltungen:
- EP-A2- 1 800 832
- DE-A1-102007 044 323
- JP-A- 62 267 121

## Beschreibung

Die Erfindung betrifft einen Aufsatzkühlring für einen Folienblaskopf einer Blasfolienanlage sowie ein Verfahren zum Herstellen eines Blasfolienschlauches.

Zur Herstellung breiter und schlauchförmiger Folien benutzt man Blasfolienanlagen. Hierbei wird ein Folienschlauch nach oben aus einer Ringdüse eines Folienblaskopfes extrudiert und senkrecht nach oben weiter transportiert. Der aus der Ringdüse austretende Folienschlauch wird durch Zufuhr von Blasluft aufgeweitet, wobei sich eine sogenannte Folienblase bildet, und außenseitig mit Kühlluft gekühlt. Je schneller der Folienschlauch gekühlt und je besser die Abkühlung gesteuert wird, umso stabiler ist der erzeugte Folienschlauch und umso geringer ist z. B. die Gefahr zur Erzeugung von Quetschfalten, die zu einer Nachbearbeitung oder im Extremfall zu Ausschussmaterial führen. Es ist bekannt, dass durch eine wirksame Kühlung des aus dem Blasfolienkopf austretenden Folienschlauches die Ausstoßleistung einer Blasfolienanlage gesteigert werden kann. Des Weiteren kann durch eine wirksame Kühlung die Folientoleranz verbessert werden, was sich in einer größeren Laufruhe auf nachfolgenden Verarbeitungsmaschinen und folglich ebenfalls in einer geringeren Ausschussquote widerspiegelt.

Aus EP 0 121 158 B1 ist eine Kühlvorrichtung für einen aus einem Folienblaskopf extrudierten Folienschlauch bekannt, die mehrere in Extrusionsrichtung als Kühlringkaskade hintereinander angeordnete Kühlringe und Ringspalte für den Austritt von Kühlluft aufweist. Die aus den Ringspalten austretende Kühlluft streicht über konvex gekrümmte Luftleitflächen der Kühlringe. Die Kühlringkaskade kann auf der Innenseite der Schlauchfolie oder auf der Außenseite der Schlauchfolie oder auch auf beiden Seiten angeordnet sein.

Die EP 1 800 832 B1 beschreibt einen Innenkühlkörper für eine Blasfolienanlage mit einer Mantelfläche, die sich von einem Fußbereich zu einem Kopfbereich hin aufweitet, wobei über ihren Verlauf offene Strömungskanäle in der Mantelfläche vorgesehen sind. Die Mantelfläche weist makroskopische Erhebungen von mindestens 3 mm auf, die an der Oberfläche des Innenkühlkörpers abstehen und eine im Betrieb der Blasfolienanlage dort entlang strömende Polsterströmung verwirbeln sollen. Die Erhebungen zur Strömungsverwirbelung sind vorzugsweise rautenförmig ausgebildet. Die Turbulenzen zwischen dem Blasfolienschlauch und dem Innenkörper verbessern auch den Wärmetransport und tragen zu einer wirksamen Abkühlung bei.

In der DE 10 2007 044 323 A1 wird eine Blasfolienanlage und Außenführung für einen Folienschlauch offenbart. Dabei wird eine Polsterströmung zwischen einer Führungsfläche und dem Folienschlauch erzeugt. Zur Verwirbelung der Polsterströmung weist die Führungsfläche makroskopisch strukturierte Erhebungen auf.

Die bekannten Kühlvorrichtungen sind konstruktiv aufwendig, entsprechend teuer und erschweren außerdem die während eines Extrusionsbetriebes notwendigen Reinigungsarbeiten am Düsenspalt des Blasfolienkopfes. Die Erfindung bezieht sich auf einen wesentlich einfacher gestalteten Aufsatzkühlring mit einem ringförmigen Körper, der eine Luftleitfläche zur Zwangsführung von Kühlluft entlang eines aus dem Folienblaskopf austretenden Folienschlauches bildet und nicht mit Düsen für die zusätzliche Kühlluftzuführung ausgestattet ist. Der Aufsatzkühlring kann ohne nennenswerten Aufwand montiert und demontiert werden und bewirkt lediglich eine Zwangsführung von Kühlluft, die an der Oberseite des Folienblaskopfes parallel zur Extrusionsrichtung des Blasfolienschlauches austritt und einen Ringspalt zwischen dem Folienschlauch und dem Aufsatzkühlring durchströmt. Die Luftleitfläche weist eine Turbulenzen erzeugende Oberflächenstruktur auf.

Der Erfindung liegt die Aufgabe zugrunde, den Aufsatzkühlring unter Beibehaltung seines einfachen konstruktiven Aufbaus so zu modifizieren, dass die Kühlkapazität der zugeführten Kühlluft besser ausgenutzt und dadurch die Kühlwirkung verbessert werden kann. Zu diesem Zweck soll die Oberflächenstruktur der Luftleitfläche besonders einfach anzupassen und auszutauschen sein.

Die Erfindung geht von einem Aufsatzkühlring mit einem ringförmigen Körper aus, der eine Luftleitfläche zur Zwangsführung von Kühlluft entlang eines aus dem Folienblaskopf austretenden Folienschlauches bildet, wobei die Luftleitfläche eine Turbulenzen erzeugende Oberflächenstruktur mit einer Vielzahl von Dellen aufweist. Erfindungsgemäß ist auf den ringförmigen Körper eine Strukturfolie aus Kunststoff aufkaschiert, welche die Oberflächenstruktur der Luftleitfläche bildet. Dies hat den Vorteil, dass die Oberflächenstruktur hinsichtlich der Größe, Anordnung und Ausgestaltung der Dellen verändert werden kann, ohne dass Prägewerkzeuge oder Spritzgießformen modifiziert werden müssen. Die Dellen können die Form von kreisförmigen Querschnitten aufweisen. Die Dellen können eine einheitliche Tiefe aufweisen oder auch unterschiedlich tief sein. Die Dellen sind vorzugsweise mit einem Versatz angeordnet und regelmäßig auf der Luftleitfläche verteilt. Im Rahmen der Erfindung liegt es aber auch, dass die Dellen auf der Luftleitfläche ungleichmäßig verteilt sind.

Die Dellen weisen vorzugsweise die Form von Kugelsegmenten auf und sind zweckmäßig in einem konstanten Teilungsmaß gereiht in mehreren Reihen angeordnet. Dabei sind die Dellen benachbarter Reihen vorzugsweise um das halbe Teilungsmaß versetzt zueinander ausgerichtet. Die Oberflächenstruktur ähnelt in diesem Fall der Oberfläche eines Golfballs und erzeugt im Nahfeld der Luftleitfläche eine turbulente Grenzschicht. Durch die entstehenden Turbulenzen kann der Wärmeaustausch vergrößert und die Wärmeleitung über den Kühlring verbessert werden. Unter Zugrundelegung eines konstanten Kühlluftmengenstromes ist eine effektivere Kühlung des Folienschlauches möglich und kann die Leistung der Blasformanlage gesteigert werden. Eine Leistungssteigerung um ca. 10 % ist möglich.

Gemäß der Erfindung weisen die Dellen einen Kreisdurchmesser von 1 mm bis 10 mm sowie eine Tiefe von 0,1 mm bis 0,6 mm auf.

Der ringförmige Körper kann aus einer Hülse aus Metall oder Kunststoff oder einer Kunststoffhülse mit einer metallischen Armierung z. B. in Form eines außen liegenden Metallstützrings bestehen. Wenn als ringförmiger Körper ein Metallring verwendet wird, kann dieser aus Stahlblech, Gusseisen oder auch Nichteisenmetallen bestehen. Bevorzugt ist ein ringförmiger Körper aus Aluminium oder einer Aluminiumlegierung.

Zur weiteren Verbesserung der Kühlwirkung des Aufsatzkühlrings können auf der von der Luftleitfläche abgewandten Seite des Kunststoff- oder Metallrings Kühlkörperelemente angeordnet werden, die beispielsweise aufgeklebt, aufgesteckt, angeschraubt oder auf sonstige Weise an dem ringförmigen Körper befestigt sind und die Wärmeübertragungsfläche gegenüber der Umgebung vergrößern. Im Rahmen der Erfindung liegt es auch, dass der ringförmige Körper ein doppelwandiges und von einem Kühlmedium durchströmbares Gehäuse aufweist, der eine Luftleitfläche für Kühlluft mit der zuvor beschriebenen Oberflächenstruktur aufweist.

Der Aufsatzkühlring umschließt vorzugsweise den aus dem Folienblaskopf austretenden Folienschlauch und unterstützt eine Außenkühlung des Folienschlauches. Zweckmäßig weist der Aufsatzkühlring einen Innendurchmesser auf, der um 5 % bis 15 % größer ist als der Durchmesser der Ringdüse des Folienblaskopfes, aus dem der Folienschlauch austritt.

Der ringförmige Körper weist vorzugsweise eine zylindrische Innenfläche auf und erstreckt sich über eine Höhe zwischen 50 mm und 250 mm. Die Innenfläche weist eine Turbulenzen erzeugende Oberflächenstruktur mit einer Vielzahl von Dellen auf und bildet die erfindungsgemäße Luftleitfläche. Die Wanddicke des ringförmigen Körpers kann nach Festigkeit des verwendeten metallischen oder polymerbasierten Werkstoffes sowie der konstruktiven Ausgestaltung des Ringkörpers zwischen 0,1 mm und 100 mm variieren, wobei eine Ringdicke zwischen 3 mm und 10 mm bevorzugt ist.

Der Aufsatzkühlring kann in seiner geometrischen Form den strömungsspezifischen Randbedingungen angepasst werden, die einzuhalten sind, um eine stabile Folienblase zu gewährleisten. Zu berücksichtigen ist insbesondere das Verhältnis von äußerer Kühlluft und Blasluft. Der ringförmige Körper des Aufsatzkühlrings ist vorzugsweise auf höhenverstellbaren Fußelementen angeordnet. Durch eine Höhenverstellung der Fußelemente kann der Abstand des Aufsatzkühlrings zur Ebene der Ringdüse verändert werden. Hierdurch ist die Wirkung der Außenkühlung veränder- und beeinflussbar. Die Höhenverstellung der Fußelemente kann über Langlochverschraubungen erfolgen und per Hand vorgenommen werden. Im Rahmen der Erfindung liegt es aber auch, dass an den Abstützstellen der Fußelemente Einstellungen über Stellmotoren vorgenommen werden.

Der ringförmige Körper weist in seiner einfachsten Ausführung ebene Stirnflächen auf, die planparallel zur Ringdüse des Folienblaskopfes ausgerichtet sind. Die Stirnflächen des ringförmigen Körpers können aber auch Profile aufweisen, die am unteren Ende den Eintritt der Kühlluft in den von dem Folienschlauch und dem ringförmigen Körper begrenzten Ringspalt begünstigen und einen Abriss der Luftströmung am oberen Ende verhindern.

Gegenstand der Erfindung ist auch ein Verfahren zum Herstellen eines Blasfolienschlauches, der aus einer Ringdüse eines Folienblaskopfes austritt, durch Zufuhr von Blasluft aufgeweitet und außenseitig mit Kühlluft gekühlt wird. Erfindungsgemäß tritt die Kühlluft an der Oberseite des Folienblaskopfes parallel zum Blasfolienschlauch aus und durchströmt einen Ringspalt zwischen dem Folienschlauch und einem Aufsatzkühlring, der wie zuvor beschrieben ausgestaltet ist.

Im Folgenden wird die Erfindung anhand einer lediglich ein Ausführungsbeispiel darstellenden Zeichnung erläutert. Es zeigen schematisch:
- **Fig. 1**: einen Aufsatzkühlring an einem Folienblaskopf mit einer Luftleitfläche zur Zwangsführung von Kühlluft entlang eines aus dem Folienblaskopf austretenden Folienschlauches,

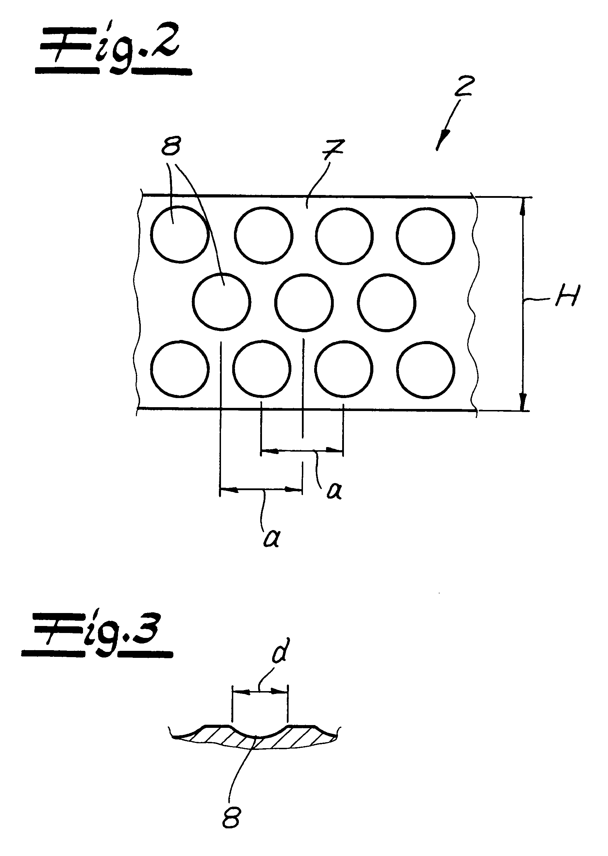

- **Fig. 2**: die Oberflächenstruktur der Luftleitfläche des in Fig. 1 dargestellten Aufsatzkühlrings in einer Draufsicht, und
- **Fig. 3**: eine Schnittdarstellung der Oberflächenstruktur.

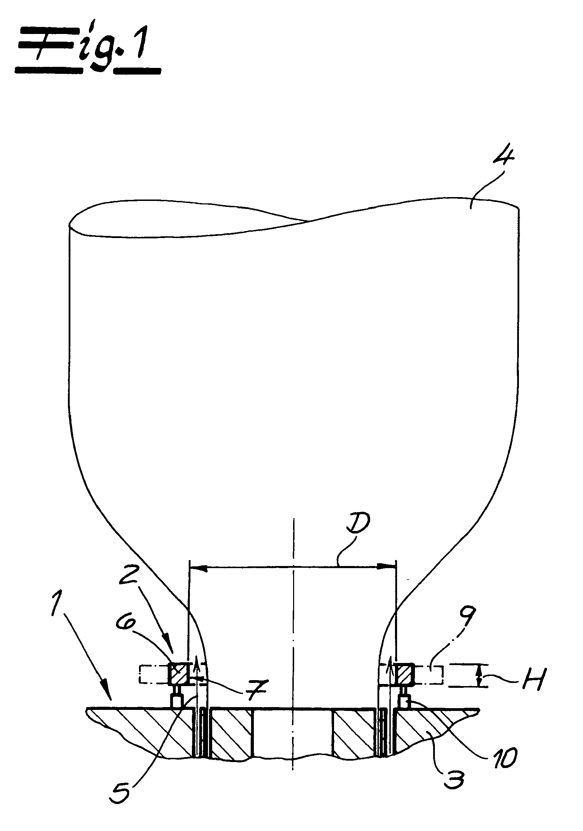

Die Fig. 1 zeigt einen Folienblaskopf 1 einer Blasfolienanlage mit einem Aufsatzkühlring 2. Die Anordnung ist Teil einer Blasfolienanlage, in welcher Kunststoff aufgeschmolzen und mittels einer Ringdüse 3 des Folienblaskopfes zu einem Blasfolienschlauch 4 extrudiert wird. Der Folienschlauch 4 wird durch Zufuhr von Blasluft aufgeweitet und außenseitig mit Kühlluft 5 gekühlt. Die Kühlluft 5 tritt an der Oberseite des Folienblaskopfes 1 parallel zur Extrusionsrichtung des Blasfolienschlauches 4 aus und durchströmt einen Ringspalt zwischen dem Folienschlauch 4 und dem Aufsatzkühlring 2.

Der Aufsatzkühlring 2 weist einen ringförmigen Körper 6 auf, der eine Luftleitfläche 7 zur Zwangsführung der Kühlluft 5 entlang des aus dem Folienblaskopf 1 austretenden Folienschlauches 4 bildet. Die Luftleitfläche 7 weist eine Turbulenzen erzeugende Oberflächenstruktur mit einer Vielzahl von Dellen 8 auf. Die Dellen 8 haben die Form von Kugelsegmenten und weisen einen Kreisdurchmesser d von 1 mm bis 10 mm sowie eine Tiefe von weniger als 0,1 mm bis 0,6 mm auf. Die Dellen 8 sind in einem konstanten Teilungsmaß a gereiht in mehreren Reihen angeordnet. Dabei sind die Dellen 8 benachbarter Reihen um das halbe Teilungsmaß versetzt zueinander angeordnet. Die Oberflächenstruktur der Luftleitfläche 7 ähnelt der Oberfläche eines Golfballs. Die Dellen 8 erzeugen in der Luftströmung Turbulenzen, welche den Wärmeaustausch zwischen der heißen Folienoberfläche des Folienschlauches 4 und dem Aufsatzkühlring 2 und damit auch die Wärmeableitung verbessert. Der Aufsatzkühlring 2 kann an der Außenseite zusätzliche Kühlkörperelemente 9 zur Vergrößerung der Wärme abgebenden Fläche aufweisen. Der ringförmige Körper 6 kann aus Metall oder Kunststoff bestehen, wobei ein metallischer Ring aus Aluminium oder einer Aluminiumlegierung bevorzugt ist. Der Innendurchmesser D des ringförmigen Körpers 6 ist um 5 % bis 15 % größer als der Durchmesser der Ringdüse 3, zur Extrusion des Folienschlauches 4. Der ringförmige Körper 6 weist eine zylindrische Innenfläche auf und erstreckt sich vorzugsweise über eine Höhe H zwischen 50 mm und 250 mm. Die Wanddicke des ringförmigen Körpers 6 kann je nach Festigkeit des verwendeten metallischen oder polymerbasierten Werkstoffs zwischen 0,1 mm und 10 mm variieren. Der ringförmige Körper 6 weist ebene Stirnflächen auf, die planparallel zur Ringdüse 3 des Folienblaskopfes 1 ausgerichtet sind.

Der ringförmige Körper ist auf höhenverstellbaren Fußelementen 10 angeordnet. Die Verstellung kann durch Langlochverschraubungen per Hand oder über Stellmotoren vorgenommen werden.

## Patentansprüche

1. Aufsatzkühlring für einen Folienblaskopf einer Blasfolienanlage mit einem ringförmigen Körper (6), der eine Luftleitfläche (7) zur Zwangsführung von Kühlluft entlang eines aus dem Folienblaskopf (1) austretenden Folienschlauches (4) bildet, wobei die Luftleitfläche (7) eine Turbulenzen erzeugende Oberflächenstruktur mit einer Vielzahl von Dellen (8) aufweist, **dadurch gekennzeichnet, dass** auf dem ringförmigen Körper (6) eine Strukturfolie aus Kunststoff aufkaschiert ist, welche die Oberflächenstruktur der Luftleitfläche (7) bildet und dass die Dellen (8) einen Kreisdurchmesser von 1 mm bis 10 mm sowie eine Tiefe von weniger als 0,1 mm bis 0,6 mm aufweisen.

2. Aufsatzkühlring nach Anspruch 1, **dadurch gekennzeichnet, dass** die Dellen (8) die Form von Kugelsegmenten aufweisen.

3. Aufsatzkühlring nach einem der Ansprüche 1 oder 2, **dadurch gekennzeichnet, dass** die Dellen (8) unterschiedlich tief sind.

4. Aufsatzkühlring nach einem der Ansprüche 1 bis 3, **dadurch gekennzeichnet, dass** die Dellen (8) mit Versatz angeordnet sind.

5. Aufsatzkühlring nach einem der Ansprüche 1 bis 4, **dadurch gekennzeichnet, dass** die Dellen (8) mit einem konstanten Teilungsmaß (a) gereiht in mehreren Reihen angeordnet sind, wobei die Dellen (8) benachbarter Reihen um das halbe Teilungsmaß versetzt zueinander angeordnet sind.

6. Aufsatzkühlring nach einem der Ansprüche 1 bis 4, **dadurch gekennzeichnet, dass** die Dellen (8) auf der Luftleitfläche (7) ungleichmäßig verteilt sind.

7. Aufsatzkühlring nach einem der Ansprüche 1 bis 6, **dadurch gekennzeichnet, dass** der ringförmige Körper (6) aus einer Hülse aus Metall oder Kunststoff oder einer Kunststoffhülse mit einer metallischen Armierung besteht.

8. Aufsatzkühlring nach einem der Ansprüche 1 bis 6, **dadurch gekennzeichnet, dass** der ringförmige Körper (6) ein doppelwandiges und von einem Kühlmedium durchströmbares Gehäuse aufweist.

9. Aufsatzkühlring nach einem der Ansprüche 1 bis 8, **dadurch gekennzeichnet, dass** der ringförmige Körper (6) einen Innendurchmesser (D) aufweist, der um 5 % bis 15 % größer ist als der Durchmesser einer Ringdüse, aus dem der Folienschlauch (4) austritt.

10. Aufsatzkühlring nach einem der Ansprüche 1 bis 9, **dadurch gekennzeichnet, dass** der ringförmige Körper (6) eine zylindrische Innenfläche aufweist und sich über eine Höhe (H) zwischen 50 mm bis 250 mm erstreckt.

11. Aufsatzkühlring nach einem der Ansprüche 1 bis 10, **dadurch gekennzeichnet, dass** der ringförmige Körper (6) auf höhenverstellbaren Fußelementen (10) angeordnet ist.

12. Aufsatzkühlring nach einem der Ansprüche 1 bis 11, **dadurch gekennzeichnet, dass** der ringförmige Körper (6) ebene Stirnflächen aufweist, die planparallel zur Ringdüse (3) des Folienblaskopfes (1) ausgerichtet sind.

13. Aufsatzkühlring nach einem der Ansprüche 1 bis 12, **dadurch gekennzeichnet, dass** die Stirnflächen des ringförmigen Körpers (6) Profile aufweisen, die am unteren Ende einen Eintritt der Kühlluft in den von dem Folienschlauch (4) und dem ringförmigen Körper (6) begrenzten Ringspalt begünstigen und einen Abriss der Luftströmung am oberen Ende verhindern.

14. Verfahren zum Herstellen eines Blasfolienschlauches, der aus einer Ringdüse (3) eines Folienblaskopfes (1) austritt, durch Zufuhr von Blasluft aufgeweitet und außenseitig mit Kühlluft (5) gekühlt wird, **dadurch gekenn-zeichnet,** dass die Kühlluft (5) an der Oberseite des Folienblaskopfes (1) parallel zum Blasfolienschlauch austritt und einen Ringspalt zwischen dem Folienschlauch (4) und einem Aufsatzkühlring (2) durchströmt, wobei ein Aufsatzkühlring (2) nach einem der Ansprüche 1 bis 13 verwendet wird.

## Claims

1. An attachment cooling ring for a film-blowing head of a blown film line, featuring an annular body (6) that forms an air guide surface (7) for the restricted guidance of cooling air along a tubular film (4) exiting the film-blowing head (1), wherein the air guide surface (7) has a turbulence-generating surface structure with a plurality of dents (8), **characterized in that** a structured film of plastic is laminated onto the annular body (6) and forms the surface structure of the air guide surface (7), and **in that** the dents (8) have a circle diameter of 1 mm to 10 mm, as well as a depth of less than 0.1 mm to 0.6 mm.

2. The attachment cooling ring according to Claim 1, **characterized in that** the dents (8) have the shape of spherical segments.

3. The attachment cooling ring according to Claim 1 or 2, **characterized in that** the dents (8) have different depths.

4. The attachment cooling ring according to one of Claims 1 to 3, **characterized in that** the dents (8) are arranged within an offset.

5. The attachment cooling ring according to one of Claims 1 to 4, **characterized in that** the dents (8) are arranged such that they are lined up in several rows with a constant pitch (a), wherein the dents (8) of adjacent rows are arranged offset to one another by half the pitch.

6. The attachment cooling ring according to one of Claims 1 to 4, **characterized in that** the dents (8) are unevenly distributed on the air guide surface (7).

7. The attachment cooling ring according to one of Claims 1 to 6, **characterized in that** the annular body (6) consists of a sleeve of metal or plastic or of a plastic sleeve with metallic armor.

8. The attachment cooling ring according to one of Claims 1 to 6, **characterized in that** the annular body (6) features a double-walled housing, through which a cooling medium can flow.

9. The attachment cooling ring according to one of Claims 1 to 8, **characterized in that** the annular body (6) has an inside diameter (D) that is 5% to 15% larger than the diameter of a tubular die that the tubular film (4) exits.

10. The attachment cooling ring according to one of Claims 1 to 9, **characterized in that** the annular body (6) has a cylindrical inner surface and extends over a height (H) between 50 mm and 250 mm.

11. The attachment cooling ring according to one of Claims 1 to 10, **characterized in that** the annular body (6) is arranged on height-adjustable leg elements (10).

12. The attachment cooling ring according to one of Claims 1 to 11, **characterized in that** the annular body (6) has a plane faces that are aligned plane-parallel to the tubular die (3) of the film-blowing head (1).

13. The attachment cooling ring according to one of Claims 1 to 12, **characterized in that** the faces of the annular body (6) have profiles that on the lower end promote an inflow of cooling air into the annular gap defined by the tubular film (4) and the annular body (6) and prevent stalling of the air flow on the upper end.

14. A method for manufacturing a tubular blown film that exits a tubular die (3) of a film-blowing head (1), is widened by supplying blowing air and externally cooled with cooling air (5), **characterized in that** the cooling air (5) exits parallel to the tubular blown film on the upper side of the film-blowing head (1) and flows through an annular gap between the tubular film (4) and an attachment cooling ring (2), wherein an attachment cooling ring (2) according to one of Claims 1 to 13 is used.

## Revendications

1. Anneau réfrigérant rapporté pour tête de soufflage de film d'une installation de soufflage de film, comportant un corps de forme annulaire (6) qui forme une surface conductrice d'air (7) pour le guidage forcé d'air réfrigérant le long d'un tube de film (4) sortant de la tête de soufflage de film (1), la surface conductrice d'air (7) présentant une structure surfacique générant des turbulences et dotée d'une multitude de bosses (8), **caractérisé en ce que**, sur le corps de forme annulaire (6), est plaqué un film structurel en plastique qui constitue la structure surfacique de la surface conductrice d'air (7) et que les bosses (8) présentent un diamètre de cercles de 1 mm à 10 mm et une profondeur de moins de 0,1 mm à 0,6 mm.

2. Anneau réfrigérant rapporté selon la revendication 1, **caractérisé en ce que** les bosses (8) ont la forme de segments sphériques.

3. Anneau réfrigérant rapporté selon une des revendications 1 ou 2, **caractérisé en ce que** les bosses (8) ont des profondeurs différentes.

4. Anneau réfrigérant rapporté selon une des revendications 1 à 3, **caractérisé en ce que** les bosses (8) sont disposées avec un décalage.

5. Anneau réfrigérant rapporté selon une des revendications 1 à 4, **caractérisé en ce que** les bosses (8) sont disposées alignées sur plusieurs rangées avec un pas constant (a), les bosses (8) de rangées voisines étant disposées décalées à raison de la moitié du pas.

6. Anneau réfrigérant rapporté selon une des revendications 1 à 4, **caractérisé en ce que** les bosses (8) sont réparties irrégulièrement sur la surface conductrice d'air (7).

7. Anneau réfrigérant rapporté selon une des revendications 1 à 6, **caractérisé en ce que** le corps de forme annulaire (6) est composé d'un manchon en métal ou en plastique ou d'un manchon en plastique pourvu d'une armure métallique.

8. Anneau réfrigérant rapporté selon une des revendications 1 à 6, **caractérisé en ce que** le corps de forme annulaire (6) présente un boîtier à double paroi où peut passer un fluide réfrigérant.

9. Annea u réfrigérant rapporté selon une des revendications 1 à 8, **caractérisé en ce que** le corps de forme annulaire (6) présente un diamètre intérieur (D) qui est 5 % à 15 % supérieur au diamètre d'une buse annulaire dont le tube de film (4) sort.

10. Anneau réfrigérant rapporté selon une des revendications 1 à 9, **caractérisé en ce que** le corps de forme annulaire (6) présente une surface intérieure cylindrique et s'étend sur une hauteur (H) de 50 mmm à 250 mm.

11. Anneau réfrigérant rapporté selon une des revendications 1 à 10, **caractérisé en ce que** le corps de forme annulaire (6) est disposé sur des éléments pieds réglables en hauteur (10).

12. Anneau réfrigérant rapporté selon une des revendications 1 à 11, **caractérisé en ce que** le corps de forme annulaire (6) présente des surfaces frontales planes qui sont orientées parallèlement au plan de la buse annulaire (3) de la tête de soufflage de film (1).

13. Anneau réfrigérant rapporté selon une des revendications 1 à 12, **caractérisé en ce que** les surfaces frontales du corps de forme annulaire (6) présentent des profils qui, à l'extrémité inférieure, favorisent une entrée de l'air réfrigérant dans la fente annulaire délimitée par le tube de film (4) et le corps de forme annulaire (6) et empêchent une interruption de l'écoulement d'air à l'extrémité supérieure.

14. Procédé de fabrication par soufflage de film d'un tube qui sort d'une buse annulaire (3) d'une tête de soufflage de film (1), est évasé par apport d'air soufflé et refroidi sur l'extérieur avec de l'air réfrigérant (5), **caractérisé en ce que** l'air réfrigérant (5) sort parallèlement au tube de film soufflé par le haut de la tête de soufflage de film (1) et passe dans une fente annulaire entre le tube de film (4) et un anneau réfrigérant rapporté (2) selon une des revendications 1 à 13, un anneau réfrigérant rapporté (2) selon une des revendications 1 à 13 étant utilisé.
